# EUROPEAN PATENT APPLICATION

(11) **EP 3 543 895 A1**
(43) Date of publication of application: **25.09.2019**
(21) Application number: 18461540.9
(22) Date of filing: 23.03.2018
(51) Int. Cl.: G06K 7/10

(54) **INTELLIGENT SHELF SYSTEM**

(71) Applicant: SURGE CLOUD Sp. z o.o., 61-725 Poznan (PL)
(72) Inventor: Stankiewicz, Olgierd, 61-148 Poznan (PL); Wegner, Krzysztof, 62-095 Murowana Goslina (PL)
(74) Representative: Wroblewski, Michal

(57) **Abstract**

An intelligent shelf system for detection of RFID tagged items comprising: plurality of RFID tag readers (1112) connected to at least one matching circuit (1115) equipped with coupling/decoupling circuit, an arrangement (1110) of at least two layers of plurality of non-overlapped antennas (1111) arranged on the top of each other, said RFID tag readers (1112) configured to be coupled with corresponding antennas (1111), wherein the at least two layers of non-overlapped antennas (1111) being displaced in respect to each other by a pre-determined ratio D of the size of an antenna (1111).

A method for precise detection of a RFID tagged items comprising the following steps: determining (201) a sequence of antenna (1111) selection; coupling (202) the selected antenna (1111) with an RFID tag reader (1112); decoupling (203) at least adjacent antennas (1111); detecting (204) RFID tags in range of the selected antenna (1111); repeating (205) the whole procedure for the rest of antennas (1111) of the pre-determined sequence; transmitting (206) results of antennas scanning to a central processing unit (1113); determining (207) a position of the tagged item.

## Description

### Technical field

The invention relates to an intelligent shelf system for detection of an item with an RFID tag placed on shelves thereof. Furthermore, the invention relates also to a method for precise detection of a RFID tagged items.

### Background

Many systems and devices facilitating detection of tagged items are known from the prior art. They allow for counting up the number of items of a given type standing on a surface of a shelf.

Usually, RFID technologies are used for this kind of operations, especially tags specified as UHF gen. 2, so tags standardized under ISO/IEC 18000-6C and approved as the EPC Gen2 Class 1 UHF standard for devices operating in the 860 MHz to 960 MHz ISM band. In this kind of solution a transmitting aerial is placed in a shelf or built up in a rear of a shelf as well as placed next to a shelf. Each shelf segment is operated by one antenna. Generally, a shelf segment allows for putting several or dozen of items. Each item is indicated by a RFID tag comprising a unique identification number facilitating unambiguous identification of each instance (each one) of an item's unit. Placement or removal of an item from a shelf is automatically detected in a system.

US patent US9740897B1 discloses an inventory management system incorporated into a shelf system. The shelf system comprises storage racks each having a plurality of shelving units, an RIFD reader and plurality of shelf antennas multiplexed to the RFID reader via the multiplexing device, wherein at least one shelf antenna is routed within each shelving unit and tuned such that only RFID tags within the outer boundary of the shelving unit respond to an interrogation signal. Moreover, at least one of the shelving units has two or more shelf antennas arranged in laterally spaced relation to one another, the two or more shelf antennas are each configured to simultaneously radiate an interrogation signal within a defined portion of physical space that is non-overlapping with the defined portion of the interrogation signal radiated by the other of the two or more shelf antennas.

US patent US7928847B2 discloses an interrogation system and an antenna used to cooperate with RFID devices, in particular an arrangement of coils which are a part of this antenna, wherein wings of such coils interleave with each other. In such arrangements coils are placed close to each other so there may be significant mutual inductance. In the result, a distortion of a magnetic field in unpredictable fashion may occur, causing failures of a transponder and applying additional load to active coil's circuits. Therefore, coils are switched sequentially or individually.

European patent EP2079042B1 discloses an intelligent shelving system and a dividing element that is able to provide information on electronically tagged items placed on the shelf. The dividing element is arranged to communicate with a controller. Further, the dividing element including an antenna having a detection plane and a base for placement on a shelf. The detection plane of the antenna is configured so as to be substantially parallel to the base. Furthermore, dividing element is arranged to identify electronically tagged items falling within the detection plane of its antenna and communicate data on said identified items to the controller.

Further, US patent US9436857B2 discloses encoded information reading system including external antennas coupled to RFID reading device and configured to receive RFID signals from RFID tags within radio frequency range of antennas which is done by utilization of a multiplexing circuit.

Furthermore, WO2010151132A1 discloses a shelf antenna configuration useful for an RFID system for recognizing objects which are provided with an RFID label, the RFID system comprising antenna loops, which form transmitting/receiving antennas.

Using present systems, it is very difficult to detect precisely a position of an item with an RFID tag placed on a shelf, thus there is a need to develop such a system.

### Summary

An Intelligent shelf system for detection of RFID tagged items according to the invention comprises a plurality of RFID tag readers connected to at least one matching circuit equipped with coupling/decoupling circuit, an arrangement of at least two layers of plurality of non-overlapped antennas arranged on the top of each other. RFID tag readers are configured to be coupled with corresponding antennas. The at least two layers of non-overlapped antennas are displaced in respect to each other by a pre-determined ratio D of the size of an antenna.

Preferably RFID tag reader is connected to the plurality of matching circuits (1115) via multiplexer.

Preferably layers of antennas are displaced in respect to each by ratio D = ½ size of the antenna or by ratio D = ¼ size of the antenna.

Furthermore, a method for precise detection of a RFID tagged items is disclosed. The method comprises the following steps:
- determining a sequence of antenna selection;
- coupling the selected antenna with an RFID tag reader;
- decoupling at least adjacent antennas;
- detecting RFID tags in range of the selected antenna;
- repeating the whole procedure for the rest of antennas of the pre-determined sequence;
- transmitting results of antennas scanning to a central processing unit;
- determining a position of the tagged item.

Preferably the coupling step and decoupling step are executed simultaneously.

Preferably all not selected antennas are decoupled during decoupling step.

Furthermore, a shelf comprising a system according to the invention is disclosed.

An intelligent shelf system for detection of an item facilitating precise determining of a location of an item placed on one of system's shelves.

Further, it allows for determining usage of a shelf, in particular determining a surface area of a shelf covered by items.

It allows also for testing whether products are placed appropriately dense and in result it facilitates optimizing placement of products on a shelf.

Furthermore, an intelligent shelf system allows for determining the absence of an item on a shelf and determining exactly a part of the shelf where the item is missing.

An intelligent shelf system facilitates analyzing from which place on a shelf items are most likely to take.

It allows to check products facing and in the result keep a store or shop appearing neat and well organized.

Finally, an intelligent shelf system allows to track the movement of an item on a surface of a shelf and determine whether the item's expiration date terminates and personnel should move it to the front of the shelf.

### Brief description of drawings

Further details and features of the present invention, its nature and various advantages will become more apparent from the following detailed description of preferred embodiments shown in a drawing in which:
Fig. 1A and 1B show examples of an arrangement of overlapping antennas,
Fig. 2A and 2B show examples of antennas used according to the invention,

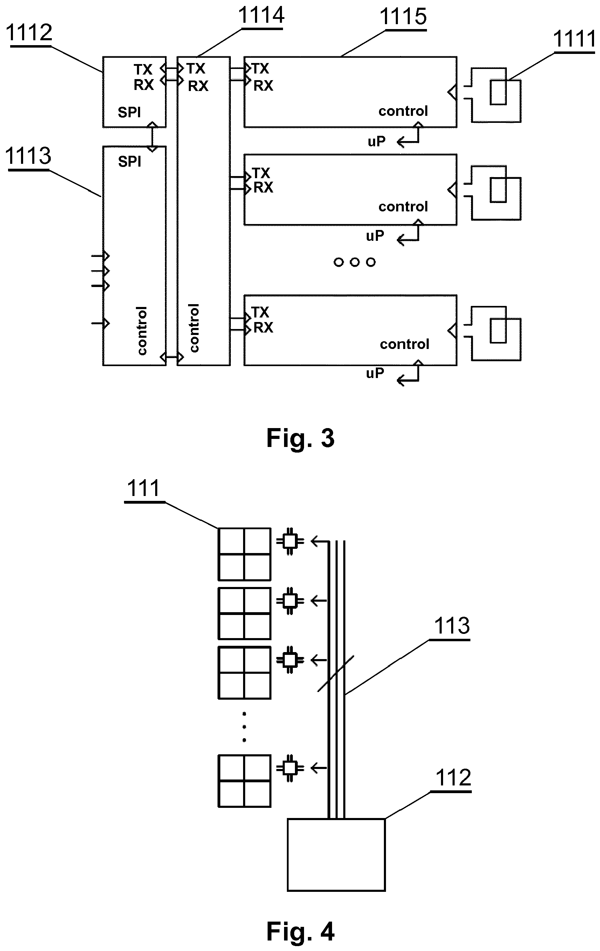

Fig. 3 shows a basic schematic view of an intelligent shelf system,
Fig. 4 shows sections of the shelf of intelligent shelf system,

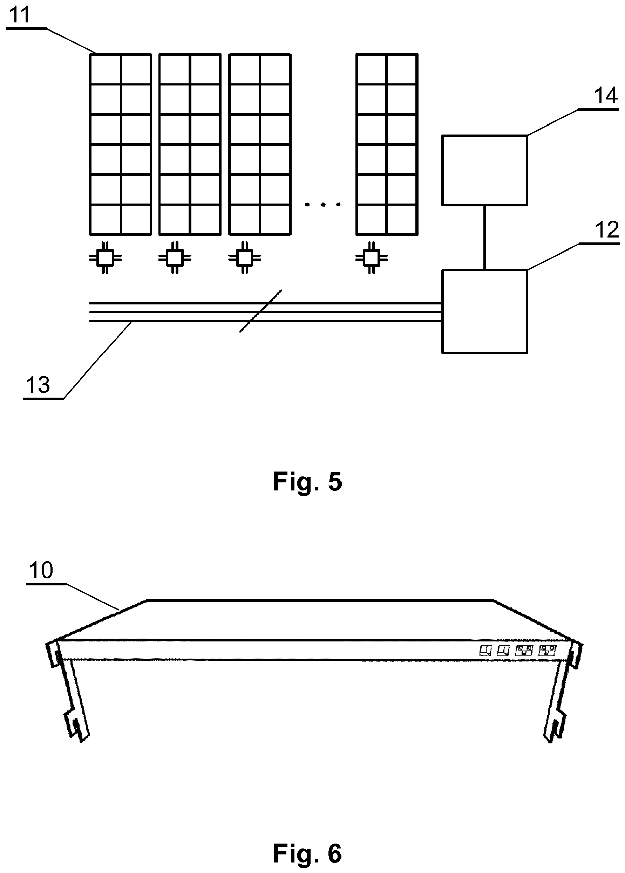

Fig. 5 shows columns of a shelf of an intelligent shelf system,
Fig. 6 shows a perspective view of one shelf of an intelligent shelf system,

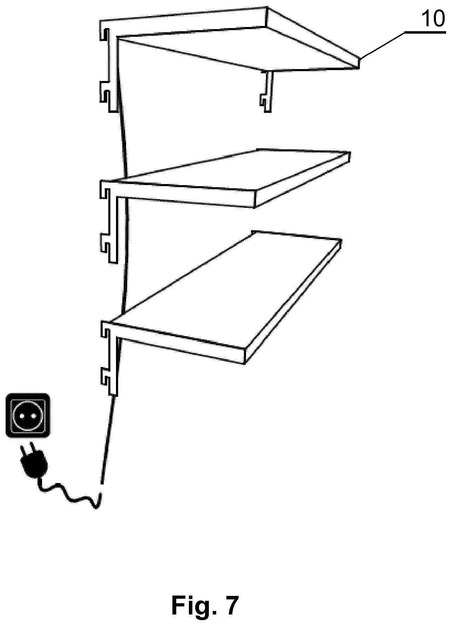

Fig. 7 shows an overall view of several shelves of an intelligent shelf system
Fig. 8 shows a detection algorithm according to the invention.

### Detailed description

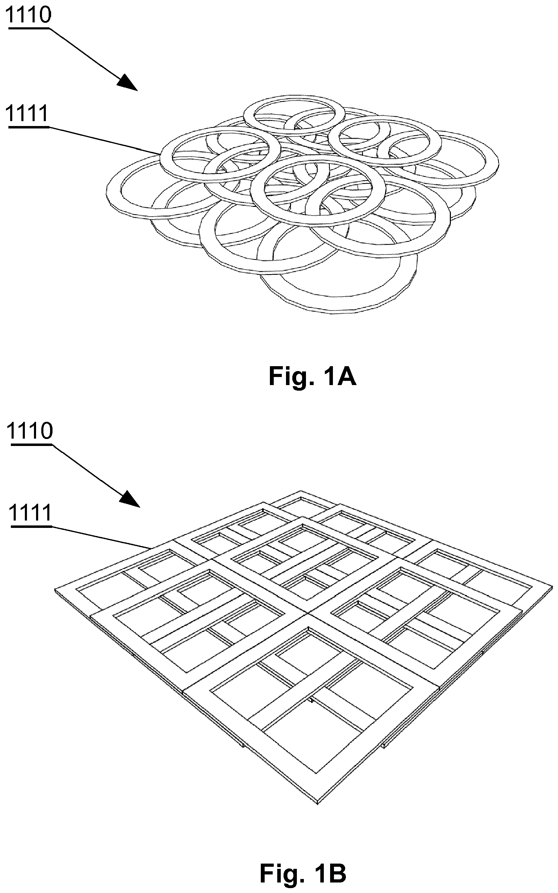

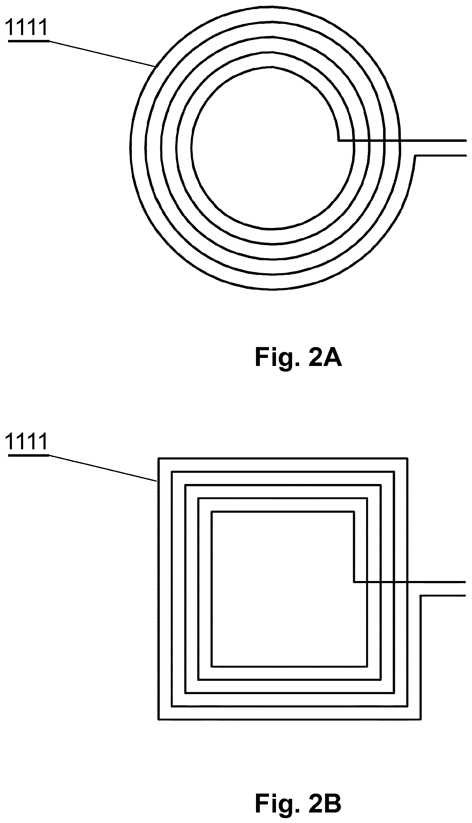

As shown in Fig. 1A and in Fig. 1B an intelligent shelf system for detection of a tagged item comprises an arrangement 1110 of mutually overlapping layers of identical antennas 1111 having a dimension comparable to an item for which a given shelf is designed. Furthermore, they can have different shapes, for example be in a form of a circle or a square as shown in Fig. 2A and Fig. 2B. Overlapping layers of antennas can be displaced in respect to each other by a pre-determined ratio D of the size of an antenna 1111. It may be, preferably, ½ size of the antenna or it may be, preferably, ¼ size of the antenna. In the mentioned system, there can be used a pre-determined number of layers of overlapping antennas, for example, in each section creating a shelf there may be four layers of magnetic antennas, where each layer is displaced with respect to each other in a different direction by ½ size of an antenna 1111 as shown in Fig. 1A and Fig. 1B. The antennas can be omnidirectional to detect items placed on a shelf and under the shelf or directional antennas to detect items placed only on a shelf and not under the shelf.

In the first preferred embodiment, wherein the pre-determined ratio D = ½ size of an antenna, each layer comprises non-overlapped antennas covering almost entire surface of a shelf and the arrangement 1110 comprises 4 layers. Layers are situated on the top of each other.
A 1^{st} layer is a base layer and its position is (0, 0).
A 2^{nd} layer is moved by a vector (D, 0) in respect to the base layer position.
A 3^{rd} layer is moved by a vector (0, D) in respect to the base layer position.
A 4^{th} layer is moved by a vector (D, D) in respect to the base layer position.

In the second preferred embodiment, wherein the pre-determined ratio D = ¼ size of an antenna, each layer comprises non-overlapped antennas covering almost entire surface of a shelf and the arrangement 1110 comprises 16 layers. Layers are situated on the top of each other.
A 1^{st} layer is a base layer, and its position is (0, 0).
A 2^{nd} layer is moved by vector (D, 0) in respect to the base layer position.
A 3^{rd} layer is moved by vector (2D, 0) in respect to the base layer position.
A 4^{th} layer is moved by vector (3D, 0) in respect to the base layer position.
A 5^{th} layer is moved by vector (0, D) in respect to the base layer position.
A 6^{th} layer is moved by vector (D, D) in respect to the base layer position.
A 7^{th} layer is moved by vector (2D, D) in respect to the base layer position.
A 8^{th} layer is moved by vector (3D, D) in respect to the base layer position.
A 9^{th} layer is moved by vector (0, 2D) in respect to the base layer position.
A 10^{th} layer is moved by vector (D, 2D) in respect to the base layer position.
A 11^{th} layer is moved by vector (2D, 2D) in respect to the base layer position.
A 12^{th} layer is moved by vector (3D, 2D) in respect to the base layer position.
A 13^{th} layer is moved by vector (0, 3D) in respect to the base layer position.
A 14^{th} layer is moved by vector (D, 3D) in respect to the base layer position.
A 15^{th} layer is moved by vector (2D, 3D) in respect to the base layer position.
A 16^{th} layer is moved by vector (3D, 3D) in respect to the base layer position.

The shelf system comprises matching circuits 1115 equipped with coupling/decoupling circuits. Each matching circuit 1115 is connected to one antenna 1111 and cooperates only with it, so for example in one section of a shelf composed of 16 antennas in 4 layers there may be 16 matching circuits with coupling/decoupling circuits. Furthermore, matching circuits 1115 can be preferably in one layer to create a matrix with dimensions of, for example, 4x4. A matching circuit 1115 can be in a form of an antenna input filter, preferably a low-pass filter.

Matching circuits 1115 with coupling/decoupling circuits facilitate communication of a particular antenna 1111 with an RFID tag connected with an item placed on a system's shelf in order to precisely locate said item. The range of communication of a given antenna is limited to the size of this antenna, so in case of successful communication, the shelf system obtains information about an antenna 1111 which is under said item, thereby obtaining information where exactly the item is located. Unfortunately, when antennas overlap each other or even when they are in a close distance from each other and do not overlap, they interfere with each other. In turn, a magnetic field from a transmitting antenna induces an electric current not only in a tag placed above the antenna but also in nearby antennas causing losses of energy that should be transmitted to the tag and not to other antennas. Coupling/decoupling circuits 1115 decouple adjacent antennas leaving active only a transmitting antenna so that an electrical current cannot be induced in those antennas, therefore energy losses in the system are eliminated. Moreover, mentioned matching circuits 1115 prevent from transmitting incorrect data to a central processing unit 1113, for example a microcontroller, as a result.

Furthermore, the intelligent shelf system comprises a number of RFID tag readers 1112, for example commercially available MRFC522, which is equal to a number of antennas 1111 used in a section 111. Those RFID tags readers 1112 are sequentially switched on one by one. When one is switched on the rest from the whole shelf 10 is switched off and antennas 1111 related with them are decoupled. The system decouples antennas 1111 according to pre-defined sequence.

The system in order to accelerate a scanning process may decouple only antennas overlapping with active one and being in a direct contact with it. Preferably, the shelf system comprises a multiplexer 1114 facilitating sequential choosing of different antennas. Using a multiplexer makes the system according to invention more price efficient.

A described construction is a section 111 of a shelf 10, where the section 111 has for example dimensions of 80x80 mm. Sections are connected by a bus 113 and controlled by a column controller 112. Column controller acts like switch and separate traffic inside the column from traffic between columns. However, there may be one address space in the whole system. By reproducing the section 111 it is possible to manufacture columns 11 creating shelves of any size, wherein each section 111 within the shelf 10 can operate independently from each other. More precisely, they can operate simultaneously or sequentially, but within one section antennas 1111 are scanned one by one. Columns 11 are connected with each other by means of a bus 13 with a shelf controller 12, for example by ESP32 controller which is connected with a power supply unit 14. In a column 11 all section 111 can read tags in parallel. It is important that all antennas from one shelf which are in contact with antennas from the other shelf and one antenna from each shelf not being in contact always need to be decoupled - it results from the range of a magnetic field of an individual antenna.

In an intelligent shelf system there is used wireless technology called MIFARE (standardized under ISO/IEC 14443) working with a frequency of 13.56 MHz and based on the principle of magnetic coupling between a transmitter and a receiver with a typical range of 20-50 mm. This small range is an advantage of the solution because it helps to localize precisely items on shelves.

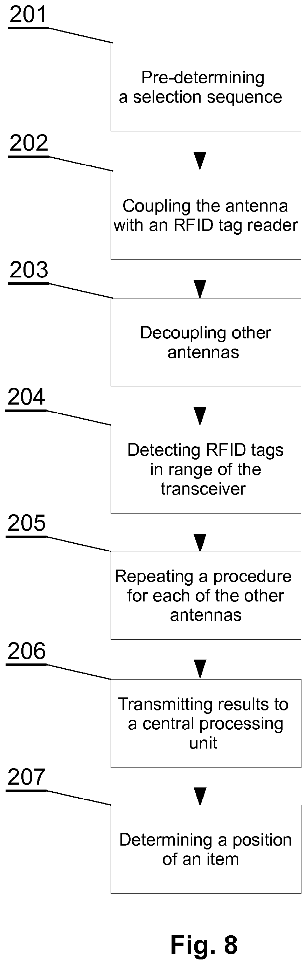

Fig. 8 shows schematically a method for precise detection of a tagged item. In the first step 201 the sequence of the antenna selection is determined. In the next step 202 the selected antenna 1111 is coupled with an RFID tag reader 1112. Preferably, an antenna from arrangement 1110 of antennas 1111 is coupled to RFID tag reader 1112 by means of a multiplexer 1114. In the same time, other antennas are decoupled in step 203. Further, in step 204 the RFID tag reader 1112 detects which RFID tags are in its range. Afterwards, in the following step 205 the whole procedure is repeated for each of the other antennas. After scanning all antennas, the process can be repeated. In step 206 the results of that scanning are transmitted to a central processing unit 1113 on the basis of which a precise position of an item with RFID tag placed on a particular shelf 10 is determined in step 207.

Each section 111 works independently according to the method but all sections can operate synchronously or asynchronously. In the first preferred embodiment, we enumerate the antennas as following:
The 1^{st} layer: 1, 2 (1^{st} row); 3, 4 (2^{nd} row).
The 2^{nd} layer: 5, 6 (1^{st} row); 7, 8 (2^{nd} row).
The 3^{rd} layer: 9, 10 (1^{st} row); 11, 12 (2^{nd} row).
The 4^{th} layer: 13, 14 (1^{st} row); 15, 16 (2^{nd} row).

The sequence of antenna selection in step 201 can be determined as the following order: 1,3,9,11; 2,4,10,12; 5,7,13,15; 6,8,14,16 (plane scanning). The scanning can also be performed with increasing order: 1, 2, 3, 4, 5, 6, 7, 8, 9, 10, 11, 12, 13, 14, 15, 16 or randomly. Detailed selection depends of application, and environment conditions.

A system and a method according to the invention can be used not only in shops with a rack with shelves but also in stores, libraries and can be even used in warehouses to check an arrangement of pallets..

## Claims

1. An intelligent shelf system for detection of RFID tagged items comprising:
- plurality of RFID tag readers (1112) connected to at least one matching circuit (1115) equipped with coupling/decoupling circuit,
- an arrangement (1110) of at least two layers of plurality of non-overlapped antennas (1111) arranged on the top of each other,
- said RFID tag readers (1112) configured to be coupled with corresponding antennas (1111),
**characterized in that**
the at least two layers of non-overlapped antennas (1111) being displaced in respect to each other by a pre-determined ratio D of the size of an antenna (1111).

2. An intelligent shelf system according to claim 1 wherein RFID tag reader (1112) is connected to the plurality of matching circuits (1115) via multiplexer (1114).

3. An intelligent shelf system according to claim 1 or 2, wherein layers of antennas (1111) are displaced in respect to each by ratio D = ½ size of the antenna (1111).

4. An intelligent shelf system according to claim 1 or 2, wherein layers of antennas (1111) are displaced in respect to each by ratio D = ¼ size of the antenna (1111).

5. A method for precise detection of a RFID tagged items having the following steps:
- determining (201) a sequence of antenna (1111) selection;
- coupling (202) the selected antenna (1111) with an RFID tag reader (1112);
- decoupling (203) at least adjacent antennas (1111);
- detecting (204) RFID tags in range of the selected antenna (1111);
- repeating (205) the whole procedure for the rest of antennas (1111) of the pre-determined sequence;
- transmitting (206) results of antennas scanning to a central processing unit (1113);
- determining (207) a position of the tagged item.

6. A method according to claim 5 wherein the coupling (202) step and decoupling (203) step are executed simultaneously.

7. A method according to claim 5 or 6 wherein all not selected antennas (1111) are decoupled during decoupling step (203).

8. A shelf (10) comprising a system according to claims from 1 to 4.
